Europäisches Patentamt

European Patent Office

Office européen des brevets

(11) Publication number:

**0 159 555**
**B1**

## (12) EUROPEAN PATENT SPECIFICATION

(45) Date of publication of patent specification: **18.05.88**

(21) Application number: **85103555.0**

(22) Date of filing: **26.03.85**

(51) Int. Cl.⁴: **A 63 G 25/00,** B 60 R 19/26

(54) Annular bumper on a vehicle, in particular amusement park vehicles such as dodgem cars.

(30) Priority: **04.04.84 IT 1201284**

(43) Date of publication of application:
**30.10.85 Bulletin 85/44**

(45) Publication of the grant of the patent:
**18.05.88 Bulletin 88/20**

(84) Designated Contracting States:
**DE FR GB SE**

(56) References cited:
**FR-A- 973 470**
**FR-A-1 019 069**
**FR-A-2 291 896**
**GB-A- 319 649**

(73) Proprietor: **Alberghini, Abele**
**Via Matteotti 80**
**I-47043 Gatteo Mare (Prov. Forli) (IT)**

(72) Inventor: **Alberghini, Abele**
**Via Matteotti 80**
**I-47043 Gatteo Mare (Prov. Forli) (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

This invention relates to an annular bumper on a vehicle, in particular amusement park vehicles such as dodgem cars.

As is known, dodgem cars are subjected to fairly powerful shocks and stresses which are absorbed by means of specially provided bumpers.

The bumpers currently employed for such vehicles comprise an annular pneumatic belt encircling the vehicle on all sides thereof and supported on a rim element fixedly attached to the car frame.

Such bumpers, while being purposely designed for this type of vehicle, can not always fully absorb the often violent shocks of two or more colliding cars, thereby it is not unusual for the persons seated on car interior of colliding cars to be injured or at least subjected to harmful shocks for the human body, especially for the brain.

A bumper system for an amusement vehicle is known from GB—A—319649 which provides shock absorption but only by the flexing of the front of the annular member and not the longitudinal movement of the whole supporting structure. The preamble of claim 1 is based on this prior art document.

In view of the above situation, the aim underlying this invention is to provide a bumper of the annular type which can absorb even powerful shocks, and in particular can be used for dodgem cars so as to reduce as much as possible accidents and injury or at least exposure to dangerous shocks of the persons seated in the cars.

The bumper according to the invention should be conceptually simple, economical, and easily mountable and demountable for replacement.

The indicated aim is achieved by an annular bumper, in particular for amusement park vehicles such as dodgem cars, according to the invention, comprising a rigid annular supporting structure extending all around the vehicle frame and an elastic element encircling and being attached to said rigid supporting structure, characterized in that said rigid supporting structure is connected transversely to said vehicle frame by means of elastic shock absorbing means which allow oscillation of said rigid supporting structure in the longitudinal direction of the vehicle frame in the event of a collision.

Further features and advantages will be more readily apparent from the following description of some preferred but not exclusive embodiments, as illustrated by way of example and not of limitation in the accompanying drawings, where:

Figure 1 is a bottom view of the frame of a car complete with the bumper according to the invention;

Figure 2 is a fragmentary sectional side view taken along the line II—II of Figure 1;

Figure 3 is a cross-sectional view taken along the line III—III of Figure 1;

Figures 4 and 5 show two variations of the elastic connection of the annular bumper to the car frame; and

Figures 6 to 9 show cross-sectional views of four embodiments of the detail of Figure 3, relating to the attachment of the annular bumper to the frame sliding guide, to an enlarged scale.

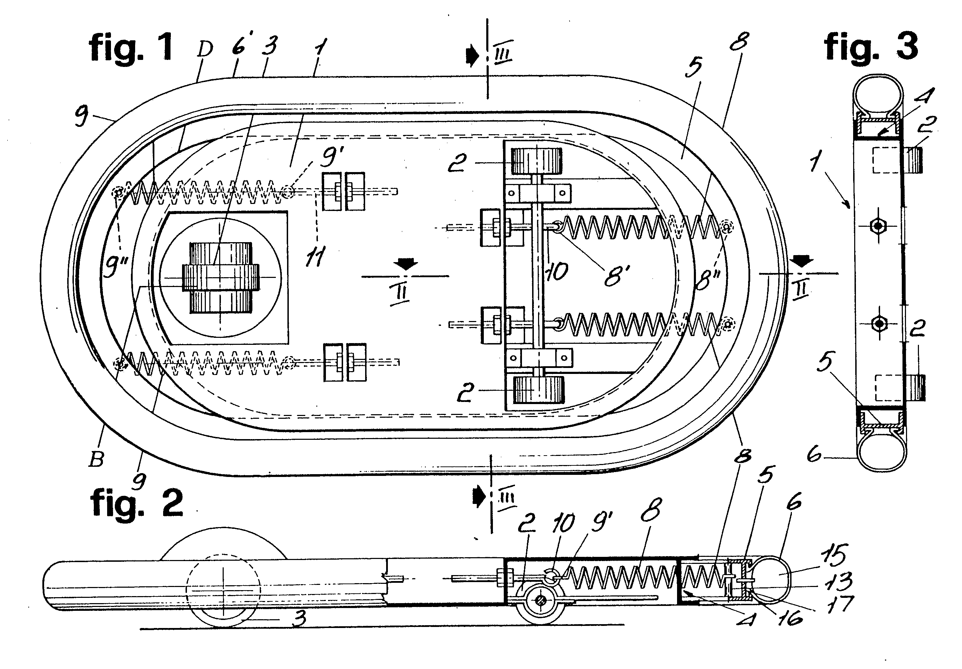

With reference to the cited figures, and in particular to Figure 1, of the dodgem car, equipped with a front wheel drive as is usual in this field, there are shown in schematical form only the frame 1, the front steering wheel 3 driven by an electric motor and the rear wheels 2.

As may be seen in particular from Figures 2 and 3, the frame 1 is provided circumferentially with a sliding guide 4 intended for exactly guiding the bumper 6 which springs elastically back or forth in the event of a collision. As may be seen from the drawings, the bumper 6 comprises substantially a rigid annular supporting structure or rim 5 and an elastically yielding element 6 formed of a tire, for example, accommodating an inflatable tube 15 on its interior. The tire 6 is fastened to the rim 5 in a conventional manner, for example, its ends 17, which are folded outwards, are retained in lugs 16 forming edges folded inwards of the rim 5, having substantially a C-like cross-section. Contrary to known bumpers, the bumper of this invention is connected to the frame 1 of the vehicle not in a fixed fashion but through elastic absorbing means 8, which, in the embodiment shown in Figures 1 to 3, comprise adjustable springs 8 and 9. The springs 8 and 9 are attached at one end 8', 9' thereof to a hook element 10, 11 rigid with frame 1 of the car, and with the other end 8'', 9'', to the rim 5, and specifically to its inner wall 13, as shown for the rear attachment in Figures 1 and 2.

Consequently, the rim 5 of the bumper, upon colliding, can oscillate longitudinally with respect to the car frame 5 which, through the lateral guides 4, supports and guides the oscillatory movement of the bumper itself. In particular the springs 8 and 9 are disposed substantially parallel to the car longitudinal axis and are secured such as to act in opposite directions and to hold the bumper centered on the frame. Thus a frontal shock will cause the springs 9 to be temporarily squeezed and the springs 8 to be extended, and a consequent translation of the whole bumper to the right in Figure 1, whereas if the shock is applied to the rear edge of the bumper the springs are inversely stressed.

While in Figures 1 to 3 the elastic absorbing means are represented by springs and while such springs have been represented to provide a rest arrangement of the bumper symmetrically about the vehicle transverse axis, other solutions are possible.

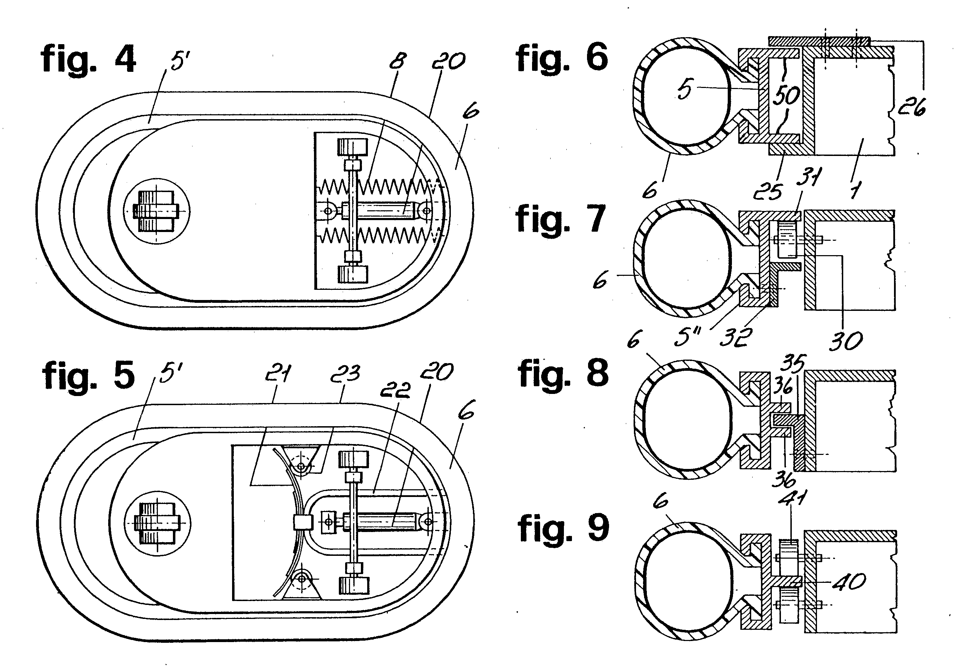

In particular in Figure 4 the bumper ring is laid out to project forwards in the rest state. This is due to the fact that in the embodiment according to this figure, the absorbing springs 8 are only provided at the rear of the car, while a further shock absorber 20 is provided which is also attached to the rear portion of the vehicle. In this embodiment excellent absorption of frontal shocks is achieved. Obviously, for the shocks applied to the sides and rear of the car, absorption is provided exclusively by the pneumatic ring. However, it should be taken into account that in the majority of cases such an arrangement is already adequate since the rear and side shocks will already have been attenuated by the springs and shock absorbers of a car of identical construction, which, by causing the collision, meets the obstacle head-on.

Also in the example of Figure 5 the bumper is laid asymmetrically to the frame 1, and precisely protruding forwards. In that embodiment the elastic absorbing means comprise a shock absorber 20 and a leaf spring 21 attached to the rim 5' of the bumper through a bracket 22 and acting on small rollers 23 carried on the frame 1 of the car. In that case during the head-on collision, the forward displacement of the frame 1 will bring the rollers 23 to further bend the leaf spring 21.

The guiding of the rim 5 over the frame 1 may be achieved in different ways, of which four embodiments are shown in Figures 6 to 9. In particular in Figure 6 the rim 5 of the tire 6 is formed with projections 50 which are accommodated in a C-like guide formed by a rib 25 of the frame 1 and an iron strap 26, bolted to the frame.

According to the version of Figure 7, the rim 5 is configured to rest on and slide over rollers 30 of the frame. To that end, the rim 5 has a portion 31 projecting toward the frame 1 which is opposed by a side of an angle element 32 bolted to the rim so as to define a seat for the small rollers 30.

The embodiment of Figure 8 also has an angle element 35, but this is bolted to the frame after being inserted in a pair of projections 36 of the rim arranged to form an exact seat for the projecting side of the angle iron 35.

Finally the rim of Figure 9 has a rib or edge 40 which, additionally to acting as a strenthening member, is engaged between two sets of rollers 41 carried on the frame.

The details described in the foregoing show the simple construction of the device, which while retaining the main features, may be easily adapted to different requirements of construction and use.

It should be noted that although bumpers mounted on telescoping shock absorbers are already known which, on moving rearwards, elastically absorb the energy of the shocks then return automatically to the initial posture, such bumpers have been typically provided for absorbing shocks during parking manoeuvers, anticipating a top speed of six kilometers per hour. By contrast, the bumper according to the invention is adapted to absorb much higher shocks, and offers undoubted advantages because it does not require slowing of the car speed (which, in an amusement park environment, would be detrimental to the enjoyment of the ride) while at the same time ensuring the safety of the passengers and also a longer working life of the car.

The elastic shock absorbing elements may be embodied in very different ways, for example, by shock absorbers of any types, hydropneumatic, spring, hydraulic absorbers etc. It should be also noted that the bumper according to the invention is not exclusively intended for Luna Park vehicles, but any other vehicle (both road and rail, both tractor and towed) of which the bumper is made as a single structure being sized to project forwardly and on the rear of the frame of the means.

## Claims

1. A bumper on a vehicle, in particular amusement park vehicles, such as dodgem cars, comprising a rigid annular supporting structure (5) extending all around the vehicle frame (1) and an elastic element (6, 15) encircling and being attached to said supporting structure (5), characterized in that said supporting structure (5) is connected to said vehicle frame (1) by means of elastic shock absorbing means (8, 9, 10, 20, 21) which allow oscillation of the supporting structure (5) in the longitudinal direction of the vehicle frame (1) in the event of a collision.

2. A bumper according to Claim 1, characterized in that said elastic shock absorbing means (8, 9, 10) are attached to the vehicle frame (1) and both to a front portion and rear portion of the supporting structure (5).

3. A bumper according to Claim 1, characterized in that said elastic shock absorbing means (20, 21) are attached between the vehicle frame (1) and rear portion of the supporting structure (5).

4. A bumper according to one or more of the preceding claims, characterized in that said supporting structure (5) has sliding guide means (4, 31, 36, 40, 50) cooperating with corresponding elements (25, 26, 30, 32, 35, 41) of the vehicle frame (1), at least at the straight side portions thereof.

5. A bumper according to one or more of the preceding claims, characterized in that said supporting structure (5) has a portion (50) slidable within a guide (25, 26) provided on said vehicle frame (1).

6. A bumper according to claims 1—4, characterized in that said supporting structure (5) has a guide (31, 32) for small rollers (30) attached to said frame (1).

7. A bumper according to claims 1 to 4, characterized in that said supporting structure (5) defines a sliding guide (36) for a projecting portion (35) rigid with the frame (1).

8. A bumper according to claims 1 to 4, characterized in that said supporting structure (5) has an edge (40) projecting toward the vehicle frame (1) engaged by pairs of small rollers (4) attached to the frame (1).

## Patentansprüche

1. Puffer an einem Fahrzeug, insbesondere Vergnügungsparkfahrzeuge, wie Autoscooter, mit einer ringförmigen starren Halterung (5), die sich um den ganzen Fahrzeugrahmen (1) herum erstreckt, und einem elastischen Element (6, 15), das die Halterung (5) umschließt und an dieser befestigt ist, dadurch gekennzeichnet, daß die Halterung (5) mit dem Fahrzeugrahmen (1) mittels elastischer Stoßdämpfer (8, 9, 10, 20, 21) verbunden ist, welche eine Schwingung der Halterung (5) in der Längsrichtung des Fahrzeugrahmens (1) im Falle eines Zusammenstoßes gestatten.

2. Puffer nach Anspruch 1, dadurch gekennzeichnet, daß die elastischen Stoßdämpfer (8, 9, 10) am Fahrzeugrahmen (1) und sowohl am vorderen Teil als auch am hinteren Teil der Halterung (5) befestigt sind.

3. Puffer nach Anspruch 1, dadurch gekennzeichnet, daß die elastische Stoßdämpfer (20, 21) zwischen dem Fahrzeugrahmen (1) und dem hinteren Teil der Halterung (5) befestigt sind.

4. Puffer nach einem oder mehreren der vorhergehenden Ansprüche, dadurch gekennzeichnet, daß die Halterung Gleitführungen (4, 31, 36, 40, 50) besitzt, die mit entsprechenden Elementen (25, 26, 30, 32, 35, 41) des Fahrzeugrahmens zumindest an dessen geraden Seitenabschnitten zusammenwirken.

5. Puffer nach einem oder mehreren der vorhergehenden Ansprüche, dadurch gekennzeichnet, daß die Halterung (5) einen Teil (50) besitzt, der in einer auf dem Fahrzeugrahmen (1) vorgesehenen Führung (25, 26) verschiebbar ist.

6. Puffer nach den Ansprüchen 1 bis 4, dadurch gekennzeichnet, daß die Halterung (5) eine Führung (31, 32) für kleine, am Rahmen (1) befestigten Rollen (30) besitzt.

7. Puffer nach den Ansprüchen 1 bis 4, dadurch gekennzeichnet, daß die Halterung (5) eine Gleitführung (36) für einen mit dem Rahmen starr verbundenen vorstehenden Teil (35) definiert.

8. Puffer nach den Ansprüchen 1 bis 4, dadurch gekennzeichnet, daß die Halterung (5) einen gegen den Fahrzeugrahmen (1) vorstehenden Rand (40) besitzt, an den ein Paar von kleinem, am Rahmen (1) befestigten Rollen (4) angreift.

**Revendications**

1. Pare-chocs de véhicule, en particulier de véhicules de parcs d'attraction tels que des autostampons, comprenant une structure rigide annulaire de support (5) qui s'étend tout autour du châssis (1) du véhicule et un élément élastique (6, 15) qui entoure ladite structure de support (5) et est fixé à celle-ci, caractérisé en ce que la structure de support (5) est reliée au châssis (1) du véhicule à l'aide de moyens élastiques (8, 9, 10, 20, 21) d'amortissement de chocs qui permettent des oscillations de la structure de support (5) dans le sens longitudinal du châssis (1) du véhicule en cas de collision.

2. Pare-chocs selon la revendication 1, caractérisé en ce que lesdits moyens élastiques (8, 9, 10) d'amortissement de chocs sont fixés au châssis (1) du véhicule et à la fois à la partie antérieure et à la partie postérieure de la structure de support (5).

3. Pare-chocs selon la revendication 1, caractérisé en ce que lesdits moyens élastiques (20, 21) d'amortissement des chocs sont fixés entre le châssis (1) du véhicule et la partie postérieure de la structure de support (5).

4. Pare-chocs selon une ou plusieurs des revendications précédentes, caractérisé en ce que la structure de support (5) possède des moyens de guidage par glissement (4, 31, 36, 40, 50) coopérant avec des éléments correspondants (25, 26, 30, 32, 35, 41) du châssis (1) du véhicule, au moins sur les parties latérales rectilignes de celui-ci.

5. Pare-chocs selon une ou plusieurs des revendications précédentes, caractérisé en ce que la structure de support (5) a une partie (50) qui peut coulisser dans un guidage (25, 26) présent sur le châssis (1) du véhicule.

6. Pare-chocs selon les revendications 1 à 4, caractérisé en ce que la structure de support (5) a un guidage (31, 32) pour des galets (30) fixés au châssis (1).

7. Pare-chocs selon les revendications 1 à 4, caractérisé en ce que la structure de support (5) définit un guidage coulissant (36) pour une partie saillante (35) rigide par rapport au châssis (1).

8. Pare-chocs selon les revendications 1 à 4, caractérisé en ce que la structure de support (5) a un bord (40) saillant vers le châssis (1) du véhicule, sur lequel viennent appuyer des paires de galets (4) fixés au châssis (1).

0 159 555

fig. 3

fig. 1

fig. 2

fig. 4

fig. 5

fig. 6

fig. 7

fig. 8

fig. 9

0 159 555